# EUROPEAN PATENT APPLICATION

(11) **EP 1 213 676 A1**
(43) Date of publication of application: **12.06.2002**
(21) Application number: 01204739.5
(22) Date of filing: 07.12.2001
(51) Int. Cl.: G06F 17/60, A01K 5/02

(54) **Animal management system**

(30) Priority: 08.12.2000 NL 1016833
(71) Applicant: N.V. Nederlandsche Apparatenfabriek NEDAP, NL-7141 DE Groenlo (NL)
(72) Inventor: Harmsen, Jan Hendrik, 7255 BJ Hengelo (NL); Odinga, Kornelis, 7206 BG Zutphen (NL)
(74) Representative: Prins, Adrianus Willem

(57) **Abstract**

The animal management system for managing animals is provided with at least one computer in which per animal identification information together with at least one associated property information parameter about predetermined properties of the respective animal, such as age, milk production, lactation stage and sex, is stored. In the computer system, groups of animals are stored, in which, on the basis of predetermined criteria, particular animals meeting these criteria are classified. In the computer system for each group at least one passage criterion is stored which is to be met by at least one property information parameter of an animal for the respective animal to be classified into the respective group. The system is further arranged to classify the animals into the groups in an automatic manner with the aid of the computer system by testing for each animal the at least one property information parameter of the respective animal against the respective passage criteria of the groups.

## Description

The invention relates to an animal management system for managing animals, the system being provided with at least one computer system in which, per animal, identification information together with at least one associated property information parameter about predetermined properties of the respective animal, such as age, milk production, lactation stage and sex, is stored, while in the computer system groups of animals are stored, in which, on the basis of predetermined criteria, particular animals meeting these criteria are classified.

The invention also relates to a method for managing animals with the aid of a computer, wherein, per animal, identification information together with at least one associated property information parameter about predetermined properties of the respective animal, such as age, milk production, lactation stage and sex, is recorded, and wherein in the computer system groups of animals are stored, in which, on the basis of predetermined criteria, particular animals meeting these criteria have been classified.

Such an animal management system and such a method are known per se and are frequently used at the modern farm. In these existing systems, the animals are classified in groups, so that settings of the system for those animals can be made readily and fast at group level. To be considered here are, for instance, a group of animals younger than 3 years of age, a group of animals between 3 and 6 years of age, a group of animals older than 6 years of age, a group of bulls, a group of cows, a group of animals having an above-average milk yield, a group of animals having an average milk yield, a group of animals having a below-average milk yield, and a group of animals that are sick. Every animal can be classified in one or more groups. Once the animals have been classified in groups, the animal management system can treat each animal depending on the group or groups in which the respective animal has been classified. When an animal presents at an automatic feeder, whereby the animal is identified in an automatic manner, the system checks in which group(s) the animal has been classified. If, for instance, the animal has been classified in the group of animals between 3 and 6 years old, it will be administered a predetermined portion of feed. If it additionally appears that the animal has been classified in a group of animals having an above-average milk yield, the animal is administered, for instance, an extra portion of feed. If, on the other hand, it appears that the animal has additionally been classified in a group of sick animals, the animal can be administered less and/or other feed. What this boils down to, briefly summarized, is therefore that when an animal belongs to a particular group, the animal management system in an automatic manner utilizes particular settings of the system for the respective animal. These settings can relate to dispensing feed in an automatic manner, as discussed above, but may also be settings of a milking robot, or relate to providing access to particular spaces, etc.

A drawback of the known system is that when an animal is to be classified in a particular group, this is not done automatically. This has to be performed by hand. This can be done through operation of a keyboard of the computer system. Also when the animal, for whatever reason, no longer belongs in a particular group and should be removed from this group, for instance because the animal has grown one year older or because the animal is no longer sick, all this must be corrected manually. In particular when the animal management system is used for a large live stock, this can entail a considerable amount of work.

The object of the invention is to provide a solution to the problem mentioned.

To that end, the animal management system according to the invention is characterized in that in the computer system for each group at least one passage criterion is stored which is to be met by at least one property information parameter of an animal for the respective animal to be classified in the respective group, and the system being further arranged to classify the animals in the groups in an automatic manner with the aid of the computer system by testing for each animal the at least one property information parameter of the respective animal against the respective passage criteria of the groups.

According to the invention, the classification of the animals in one or more categories is carried out in an automatic manner, since the property information parameters of the animals, such as age, milk production, lactation stage and sex, can be inputted automatically and/or a single time. Suppose, for instance, that the date of birth of the animal has been entered a single time. The system can then determine the age of the animal in an automatic manner. The system is then also capable, when the animal has grown one year older, to see in an automatic manner whether the animal, on the basis of its older age, must perhaps be removed from a particular age group and be entered in a different age group. When this does in fact appear to be the case, all this is automatically carried out by the system. The property information parameter of milk production can also be inputted at the system in an automatic manner. To be considered here, for instance, is an animal management system which is further provided with a milking plant such as a milking robot. Adjacent the milking robot, for instance, an animal identification system may be arranged. The animal is thus identified and the milking robot further determines the milk production. The data about the milk production are stored in the computer system in an automatic manner. The computer system can proceed to classify the animal in an automatic manner in a group with a passage criterion regarding milk production that is met by the respective animal. The passage criterion for a group having an average milk production can be, for instance, that the milk production must be above a minimum and below a maximum limit. If the property information parameter concerning the milk production meets the passage criterion of the respective group, the animal is classified in this group in an automatic manner. If, by contrast, the animal has a milk production which is lower than the minimum value mentioned, the animal is classified in an automatic manner in a group of animals having a milk production below average. What this boils down to, briefly summarized, is therefore that according to the invention the classification and reclassification in groups can be carried out in a fully automatic manner. Moreover, the property information parameters on the basis of which the animals are classified can generally be inputted in an automatic manner, or be entered manually a single time (such as date of birth). A further advantage of the system is that the animals are always optimally classified in the correct categories. This in turn provides the advantage that the animal management system will always treat the animals optimally.

In particular, the computer system is arranged, in use, after the property information parameters of the animals have been upgraded, to reclassify the animals in groups on the basis of the upgraded property information.

According to a preferred embodiment, it holds that the computer system is arranged, in use, to reclassify the animals in groups repeatedly over time. In this way, the group classification is continuously upgraded. The computer system can be arranged, for instance, to determine once every twenty-four hours whether the animals are perhaps to be reclassified in other groups or that perhaps there are animals which are still to be classified.

Preferably, it holds that the animal management system is further provided with animal treatment means, such as an automatic feeder or a milking robot, for treating the animals, the computer system being further arranged for controlling the treatment means for a particular animal depending on whether or not the animal is classified in at least one predetermined group of the groups.

In this manner, feeding the animals or milking the animals can be carried out in a wholly optimal manner for the respective animal, all this depending on the group or groups in which the respective animal is classified. These can then be groups that pertain to age, milk production, lactation stage and the number of milkings related to the milk production.

According to a further elaboration of the invention, it holds that the system is further provided with a controllable passage which can be controllably released and closed, the computer system being further arranged for controlling the passage for a particular animal depending on whether or not the animal is classified in at least one predetermined group of the groups.

The passage can be, for instance, a passage to special spaces where sick animals are located. When the animal presents at the respective passage, the identity of the animal is determined in an automatic manner. Then the animal management system proceeds to determine whether the respective animal has perhaps been classified in a group of sick animals. If this appears to be the case, the passage is opened by the animal management system in an automatic manner, so that the animal can proceed to the respective space. Naturally, other variants for passage control depending on group classification are also conceivable.

In particular, therefore, it holds that at least one controllable passage is provided with a local computer in which per animal the identification information mentioned and the groups mentioned are stored.

According to a further elaboration of this variant, it holds that the animal management system is further provided with an animal identification system for identifying the animals, the animal identification system, in use, transmitting identification information of an identified animal to the computer system.

For another further elaboration of this variant, it holds that the computer system is arranged, on the basis of the identification information of an animal present adjacent one of the treatment means, to control the treatment means depending on whether or not the identified animal is classified in at least one predetermined group of the groups.

According to a highly advanced embodiment of the animal management system, it holds that the computer system is arranged, in use, with the aid of the animal identification system, to store information about where an animal is, for further processing. Through recognition points (feedings stations, milking space, location selection gate), it is possible to determine where the animal is at a particular time. A location is a space in which one or more animals can be located. Also, a location can include other locations. Depending on the group or groups in which the particular animal is classified, the animal can be given access from a particular location to other locations.

Further, the invention relates to an animal management system for managing animals, the system being provided with at least one computer system in which per animal identification information together with at least one associated property information parameter about predetermined properties of the respective animal, such as age, milk production, lactation stage and sex, is stored, the animal management system being further provided with a plurality of passages controllable by the computer system, which passages are each provided with a first and second side, while an animal, when a passage has been opened, can proceed via the passage from the first side to the second side of the respective passage, the animal management system being further provided with an animal identification system for detecting and optionally identifying an animal located on the first side of the controllable passages, characterized in that in the computer system per controllable passage at least one first passage criterion is stored which an animal must meet to pass the respective passage from the first side to the second side, the computer system being arranged, when the identification system detects an animal on the first side of a controllable passage, to test the at least one property information parameter of the respective animal against the first passage criterion of the respective passage, and wherein the computer system, on the basis of the test performed, opens or does not open the passage when the at least one property information parameter meets or does not meet the test, respectively.

This system too has as an advantage that for granting passage to animals, the animals do not need to be classified in groups manually. To that end, in this system, for the purpose of granting passage, no use is made of groups, so that manual classification in groups is not necessary. Due to the feature that in the computer system per controllable passage at least one first passage criterion is stored which an animal must satisfy to pass the respective passage from the first side to the second side, while moreover in the computer system per animal at least one property information parameter about predetermined properties of the respective animal is stored, it can be decided per animal whether passage can be granted to the animal at a passage. If the farm is provided, for instance, with a plurality of locations which are connected with each other via the passages referred to, the animal, depending on its properties, can visit certain locations and cannot visit others. As a result, the animal can traverse certain paths of successive locations and cannot traverse other paths. In this way, an animal can be guided, for instance, to a sickbay. As the property information parameters about predetermined properties of the respective animal (such as milk production, lactation stage, temperature, and the like) can also be continuously updated, the path an animal can traverse can likewise be updated continuously.

The invention will presently be further elucidated with reference to the drawing.

In the drawing:
Fig. 1 schematically shows a possible embodiment of an animal management system installed at a farm;
Fig. 2 shows a possible classification of the animals in groups; and
Fig. 3 schematically shows an alternative embodiment of an animal management system installed at a farm.

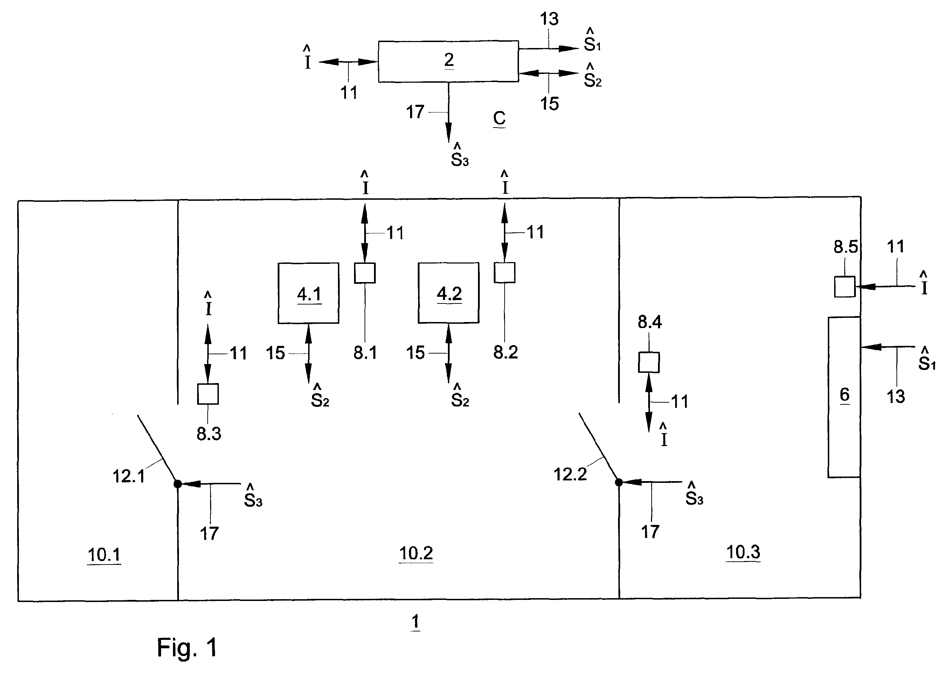

In Fig. 1, reference numeral 1 designates an animal management system for the management of animals, the management system in question being implemented on a schematically designated farm. The system is provided with a computer system C which, in this example, comprises at least one central computer 2. The system is further provided with a first and second milking plant 4.1 and 4.2 which, in this example, each consist of a milking robot. The milking robot 4.1 and 4.2 is of a type known per se. Further, the system is provided with an automatic feeder 6, known per se. The system is further provided with a plurality of readers 8.i (i=1,2,...5). The farm in this example is subdivided into three spaces 10.1, 10.2 and 10.3 in which the animals can be present. The spaces 10.1, 10.2 and 10.3 are separated from each other through partitions, each partition including a controllable passage 12.1 and 12.2, respectively. The passage 12.1 provides the passage from the space 10.1 to the space 10.2 and vice versa. The passage 12.2 provides the passage from the space 10.2 to the space 10.3 and vice versa.

In this example, the reader 8.1 is arranged adjacent the milking robot 4.1, the reader 8.2 adjacent the milking robot 4.2, the reader 8.3 adjacent the passage 12.1, the reader 8.4 adjacent the passage 12.2, and the reader 8.5 adjacent the automatic feeder 6. The automatic feeder 6 is arranged together with the reader 8.5 in the space 10.3. The two milking robots are arranged together with the readers 8.1 and 8.2 in the space 10.2. The space 10.1 functions as space for treatment of sick animals.

The readers 8.i (i=1,2,...5) are each connected with the computer 2. In this example, the animals are each provided with a label, known per se, which comprises a transponder or responder in which identification information, in this example an identification code of the respective animal, is included. The label comprises, for instance, a resonant circuit and a microprocessor coupled thereto in which the respective identification code is included. The label can be designed, for instance, with an absorption or transmission system. When an animal is located in an interrogation field which is radiated, for instance, by the reader 8.1, the label responds through resonance of the resonant circuit and the animal is identified by the reader 8.1 in an automatic manner. The resonant circuit can then be modulated by the microprocessor with the identification code *Î*. The identification code *Î* thus detected by the reader 8.1 is supplied to the computer 2 via a line 11. In this way, each of the readers is arranged to transmit the identification code of an identified animal to the computer 2. The maximum distance to a reader within which a label is detected is determined by the strength of the electromagnetic interrogation field radiated by the respective reader. The computer 2 generates control signals for controlling the automatic feeder 6 via a line 13. The computer 2 also generates control signals for controlling the milking robots 4.1 and 4.2 via a line 15. In addition, the computer 2 generates control signals Ŝ₃ for controlling the automatic passages 12.1 and 12.2 via a line 17.

In the computer 2, per animal, the animal identification information is stored, in this case an identification code associated with the respective animal. Stored with each identification code, further, is at least one associated property information parameter of the respective animal. In this example, per animal, two property information parameters are stored. The first property information parameter concerns the date of birth of the animal and the second property information parameter concerns the average milk production of the animal. This milk production is determined as follows. When the animal presents at the milking robot 4.1, the identification code of the animal is determined with the aid of the reader 8.1. This animal is subsequently milked. The amount of the milk yield of the animal is transmitted by the milking robot 4.1 to the computer 2. The computer proceeds to determine, in a manner known per se, the average milk production of the respective animal. This average milk production concerns one of the property information parameters of the animal.

Further, in the computer, groups of animals are stored, in which, on the basis of predetermined criteria, particular animals that meet these criteria are classified. In this example, six groups Gᵢ (i=1,2,...6) are stored in the computer. Group G1 concerns animals younger than 3 years of age. Group G2 concerns animals of an age between 3 and 6. Group G3 concerns animals older than 6 years of age.

The group G4 concerns animals with an average milk production which is less than ML, ML being a predetermined value. The group G5 concerns animals with a milk production greater than ML but less than MH. Animals with a milk production in the range from ML to MH are animals having a normal average milk production. Further, the group G6 concerns animals having a milk production greater than GH. These are animals with a milk production above average. In this example, on the farm, six cows having the respective identification codes K1, K2, K3, K4, K5 and K6 are present.

The cow K1 has the following property information parameters: the date of birth is May 1, 1997 and the average milk yield as determined by the computer with the aid of the milking robots 4.1 and 4.2 is 30 liters per twenty-four hours. The corresponding parameters for cow K2 are April 3, 1995 and 60 liters per twenty-four hours; for cow K3 September 1, 1992 and 25 liters per twenty-four hours; for cow K4 September 1, 1995 and 40 liters per twenty-four hours; and for cow K5 March 31, 1998 and 35 liters per twenty-four hours.

Further, it holds that ML = 35 liters per twenty-four hours and MH = 45 liters per twenty-four hours.

Accordingly, it holds that the date of birth of the cows K1-K5 has been entered into the system a single time, while the computer, in a manner known per se, determines the average milk yield per cow.

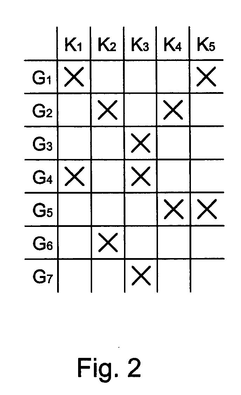

The operation of the animal management system as described so far is as follows. The computer starts with classifying the cow K1 in the groups. First of all, the computer calculates the age on the basis of the date of birth of the cow K1. In this example, the internal clock of the computer indicates, for instance, that the date is January 3, 2000. The computer then calculates that the cow K1 has an age of 3 years. On the basis of this age, the computer classifies the cow K1 in the group G1. See also Fig. 2 representing the classification of the animals in groups in the form of a matrix. A cross in box ij indicates that the cow Ki is classified in the group gj. This is done by the computer by comparing the property information parameter regarding age, having the value 3 in this example, with the passage criteria associated with the groups G1, G2 and G3. Then it follows that the cow K1 is classified in the group G1. The other property information parameter of the cow K1 concerns the milk yield, which equals 3 liters. Entirely analogously, by comparison with the passage criteria associated with the groups G4, G5 and G6, the cow K1 is thus classified in the group G4.

The computer then proceeds to repeat the above-outlined steps for the cow K2, K3, K4 and K5. Thus, the cow K2 is classified in the groups G2 and G6; cow K3 in the groups G3 and G4; cow K4 in the groups G2 and G5; and cow K5 in the groups G1 and G5.

When subsequently the cow K1 presents at the feeding station 6, it is determined with the aid of the reader 8.5 that the cow K1 is at the feeding station 6. The identification code determined by the reader 8.5 is supplied to the computer 2. The computer 2 proceeds to establish that the cow K1 has been classified in groups G1 and G4. On the basis of the fact that the cow K1 has been classified in group G1, the respective animal, which is still young, is supplied with a portion of feed tailored to the age of this animal. On the ground of the fact that the cow K1 produces milk below the average, no special measure is taken. When, for instance, the cow K2 presents at the feeding station 6, with the aid of the reader 8.5 the identification code K2 is supplied to the computer 2 again. On the ground of the fact that the cow K2 is classified in the group G2, a portion of feed tailored to this age category is dispensed. On the ground of the fact that the cow K2 has been classified into group G6, and therefore produces milk above the average, moreover an extra portion of feed is supplied to the animal. Thus the feeding station 6 for treating the animals is controlled by the computer for treating the respective animal on the basis of the group G2 and the group G6 in which the respective has been classified. Due to the fact that the animal has been classified in these groups, the portions of feed mentioned are dispensed.

Entirely analogously, for the cow K3, K4 or K5, a portion of feed tailored to the animal by the computer 2 can be furnished on the basis of the group and/or groups in which the respective animal has been classified. If, for instance, cow K3 presents at the feeding station 6, then, on the ground of the fact that, on the one hand, the animal is a bit older (group G3) and, on the other, the animal produces a less than average amount of milk (group G4), a portion of feed adjusted accordingly can be dispensed. Such adjustment can involve both the quality and the quantity of the feed.

The invention is not in any way limited to the embodiments outlined above. Thus, in the computer, for instance a seventh group G7 may be defined. The passage criterion for the group G7 can be, for instance, the criterion that the respective animal is sick. That the respective animal is sick can be entered manually at the computer 2 in a manner known per se. The farmer then enters that, for instance, the cow K3 is sick. This is also shown in Fig. 2. It is also possible, however, that this is carried out in an automatic manner. When the computer 2 establishes, for instance, with the aid of the milking robot 4.2, that the milk yield of the cow K3 has been below average for a prolonged period of time, the computer 2 can classify the cow K3 in the group G7 in an automatic manner. The computer 2 then establishes first of all that the cow is sick, which involves a property information parameter relating to the sickness of the animal being classified as positive. Thereupon the property information parameter is compared with the passage criterion of the group G7, whereby the respective animal K3 is automatically classified in group G7. When the cow K3 presents at the controllable passage 12.1, first of all, with the aid of the reader 8.3, the identity of the animal is established and passed on to the computer 2. The computer 2 establishes that the animal K3 has been classified inter alia in group G7. On the ground of the fact that the animal K3 has been classified in group G7, the computer 2 controls the passage 12.1 in an automatic manner, such that it is opened. The animal K3 can then proceed to the space 10.1 which is specially intended for treatment and examination of sick animals. Entirely analogously, when the cow K3 presents at the controllable passage 12.2, the computer 2 can keep the passage 12.2 closed, so that the sick animal cannot move to the feeding station 6. In the example, the computer is moreover arranged, after the property information parameters of the animals have been upgraded, to reclassify the animals on the basis of the upgraded property information. When, for instance, the average milk yield of a particular animal has changed, the computer can see in an automatic manner whether the animal must perhaps be classified in a different group. Thus, it may happen, for instance, that when the average milk yield of the cow K1 increases by, for instance, 4 liters a day, the cow K1 is reclassified from group G1 to group G2. Also, the computer can be so arranged as to reclassify the animal repeatedly over time. Thus, the computer can be arranged such that it is checked once a week or once a day whether the animals are to be classified in other groups on the ground of upgraded property information parameters. Thus, it can happen, for instance, that it appears that the animal has meanwhile grown one year older, which can entail a reclassification in groups.

By virtue of the above-outlined dynamic groups, the animals can be optimally treated and the farmer does not need to classify the animals in groups by hand every time. Naturally, the system can be expanded with other groups, and on the basis of the groups other parts of the animal management system can be controlled. Thus the farm may also be provided with a space for calved animals which is accessible via a controllable passage. For the calved animals, also a special group can be created in the computer, on the basis of which the animals that form part of this group can gain access to the space mentioned. Also, special spaces can be created for providing roughage and/or concentrates depending on predetermined dynamic groups in which animals can be classified in an automatic manner.

Further, each passage 12.i can be provided with a local computer with its own database. In this computer, for instance identification information of cows can be stored together with the information on whether they have access to a particular space. This information can then be related again to predetermined groups of animals which have access to a particular space. The reader which is arranged at the respective passage is then further connected with the local computer of the respective passage. The reader determines the identity of the animal and supplies it to the computer of the gate. The computer of the gate analyzes whether the animal belongs to a predetermined group which has access to the space behind the passage and controls the passage accordingly to open the passage when the animal belongs to the group that has access to the respective space. If the animal does not belong to the predetermined group, the gate is not opened. To that end, the database of the local computer can be filled with the identification information of the animals as well as per animal in which groups they have been classified. To that end, the local computers can also be connected with the central computer 2 to retrieve these data from this central computer. The local computer then does not need to have its own database. In all of these manners, the passage can be controlled rapidly and reliably. Also, the local database of the computer which belongs to the passage can be upgraded at regular times (for instance from the central computer) with the identification codes of new animals and/or new groups and/or reclassified groups. Within the framework of the invention, the computer system C is therefore understood to encompass a local computer which is arranged at a passage. The local computer of a passage and the central computer 2 jointly form the computer system C. It is also possible that the central computer 2 is arranged, in use, with the aid of the animal identification system, to generate or store information on where an animal is located, for further processing. Such variants are each understood to fall within the framework of the invention. This example concerned an animal management system for cows. However, the system can also be used for other animals and combinations thereof.

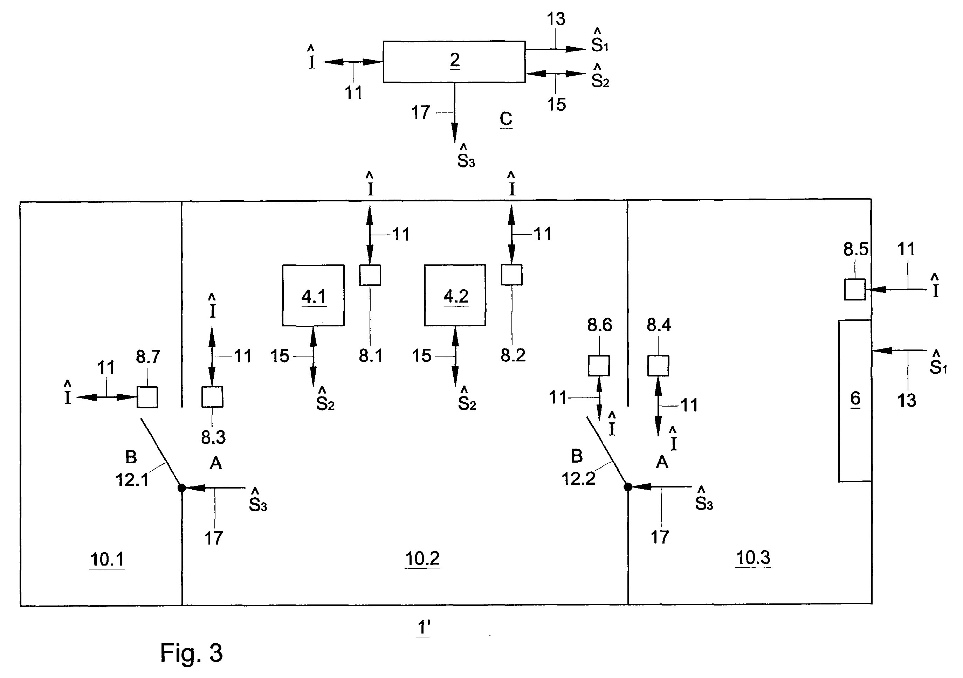

In Fig. 3, reference numeral 1' designates an alternative animal management system for managing animals according to the invention. The animals can again be cows, pigs, and other animals. The management system can also be used for combinations of different species of animals.

In Fig. 3 parts corresponding to Fig. 1 are provided with the same reference numerals. In the computer 2 of the computer system C, there is stored, per animal, identification information together with at least one associated property information parameter about predetermined properties of the respective animal, such as age, milk production, lactation stage, sex, body temperature and the like. The passages 12.1 and 12.2 each have a first side A and a second side B. Further, the reader 8.4 is arranged to determine the identification code *Î* of an animal which is located on the first side A of the passage 12.2. The system is further provided with a reader 8.6 to determine the identification code *Î* of an animal that is located on the second side B of the passage 12.2.

The reader 8.3 is arranged to determine the identification code *Î* of an animal which is located on the first side A of the passage 12.1. The system is further provided with a reader 8.7 to determine the identification code *Î* of an animal which is located on the second side B of the passage 12.1.

When the passage 12.2 is opened, the animal, in this example, can move from the first side A to the second side B of the passage 12.2. It is conceivable that the passage is provided with a turnstile, known per se, which only permits the animal to move from the first side A to the second side B. In this example, however, when the passage 12.2 is opened, an animal can also move from the second side B to the first side A of the passage 12.2. This last also applies to the passage 12.1. When it is opened, an animal can move from the first side A to the second side B or from the second side B to the first side A.

In the central computer 2 there is stored for the passage 12.1 at least one first passage criterion which an animal must meet to be allowed to pass the respective passage 12.1 from the first side A to the second side B. Further stored in the computer 2 is at least one first passage criterion for the passage 12.2 which an animal must meet to be allowed to pass the passage 12.2 from the first side A to the second side B. The first passage criterion of the passage 12.1 in this example is that the animal has an increased temperature. The first passage criterion of the passage 12.2 is that the animal has eaten at the automatic feeders 6 less than two hours ago.

Accordingly, it holds that in the central computer 2, per controllable passage 12.1, 12.2 first passage criteria are stored which an animal must meet to pass the respective passage from the first side A to the second side B.

Further, it holds that in the central computer 2 there is stored for the passage 12.1 at least one second passage criterion which an animal must meet to be able to pass the passage 12.1 from the second side B to the first side A. This second passage criterion can be, for instance, that the animal does not have an increased temperature or is not sick. Further stored in the computer 2 is at least one second passage criterion for the controllable passage 12.2 which an animal must meet to pass the passage 12.2 from the second side B to the first side A. In this example, the second passage criterion of the passage 12.2 is, for instance, that the animal has not fed for at least two hours.

When an animal presents at the first side A of the passage 12.1, the identification code of the animal will be determined by the reader 8.3. The range of the reader 8.7 in this example is such that it cannot determine the identification code of the animal located on the side A of the passage 12.1. The identification code *Î* determined by the reader 8.3 is supplied to the central computer 2. The central computer 2 thus knows which animal is located on the first side A of the first passage 12.1. The central computer 2 proceeds to determine, on the basis of the identification code of the animal, the associated property information parameters of the animal. In this example, the computer 2 analyzes whether a property information parameter of an animal is present that indicates what the temperature of the animal is. The respective property information parameter is thus compared with the first passage criterion, indicating that the passage 12.1 can be opened when the respective animal has an increased temperature. When the test carried out by the computer 2 is positive, that is, the animal has an increased temperature, the computer 2 controls the passage 12.1 to open it. The animal can then move from the first side A to the second side B and will thus walk from the space 10.2 to the space 10.1, which is intended for sick animals.

Entirely analogously, in this example, an animal located on the second side B of the passage 12.1 is identified exclusively by the reader 8.7. The range of the reader 8.3 is such that it does not detect the animal. The reader 8.7 transmits to the computer 2 which animal is located on the second side B of the passage 12.1. The computer 2 proceeds to assess entirely analogously, as described above, whether the passage 12.1 can be opened by comparing the respective relevant property information parameter of the animal with the second passage criterion of the passage 12.1. In this example, the second passage criterion is that the animal does not have an increased temperature. If the respective property information parameter of the animal (for instance the property information parameter of the animal indicating what the temperature of the animal is) indicates that it does not have an increased temperature, the computer 2 will control the passage 12.1 so that it is opened.

The property information parameters can therefore be the measured temperature of the animal, the first passage criterion being that the respective temperature is higher than a predetermined temperature and the second passage criterion being that the respective temperature is lower than the predetermined temperature. The property information parameters are thus tested against the first passage criterion. It is also possible, however, that the respective relevant property information parameter only indicates whether or not there is an increased temperature. The first passage criterion of the passage 12.1 is then "increased temperature/yes", while the second passage criterion of the passage 12.1 is then "no increased temperature". Such variants are each understood to fall within the scope of the invention.

Whether an animal has an increased temperature can optionally, in a manner known per se, be measured automatically. The corresponding property information parameter of the respective animal can thereupon be automatically inputted at the central computer 2 for use as described above.

Entirely analogously, an animal located on the second side B of the passage 12.2 is recognized. When thus the identification code of the animal has been determined, this is passed to the computer 2. In this example, too, the range of the reader 8.4 is such that it can only recognize an animal when it is located on the first side A of the passage 12.2. Conversely, the reader 8.6 can only recognize an animal when it is located on the second side B of the passage 12.2. All this is entirely analogous with the discussion for the readers 8.3 and 8.7, respectively.

When thus an animal located on the second side B of the passage 12.2 has been recognized, the computer 2 checks whether the respective animal has not fed for a period of more than two hours. In this example, accordingly, per animal, a property information parameter is stored which indicates when the animal has last fed. Thus the computer 2 can determine whether the animal has not fed for a period longer than two hours. If not, the passage 12.2 remains closed. If so, the computer 2 will open the passage 12.2 so that the animal can go from the second side B to the first side A. The animal then goes to the feeding station 6. Here the animal will be recognized by the reader 8.5. Thereupon, a portion of feed intended for the animal is thereupon administered to the animal in an automatic manner. The computer 2 subsequently monitors when the animal has fed. When after feeding the animal goes to the passage 12.2, it will be recognized by the reader 8.4 on the first side A. The reader 8.4 transmits the identification code of the recognized animal to the computer 2. The computer 2 checks on the basis of the first passage criterion of the passage 12.2 whether the animal has fed less than two hours ago. According to the property information parameter of the respective animal, it has fed ten minutes ago in this example, so that the computer 2 will open the passage 12.2.

In this example, it holds for every passage that the first passage criteria and the second passage criteria are different from each other. However, this is not necessarily always so. It is also possible that for a particular passage the first and the second passage criteria are identical. In that case, it is not relevant either that it be detected not only which animal is located at a passage but also on which side of the passage the animal is located. If, for instance, for the passage 12.1 the first and the second passage criteria were identical to each other, the reader 8.7 could be omitted. For the reader 8.3 it then holds that it has a range such that it recognizes an animal when it is located at the first and at the second side of the passage 12.1. The reader 8.7 could also be omitted when the passage 10.1 comprises a turnstile, so that the animals can go only from the first side A to the second side B when the turnstile is unlocked by the computer 2. The reader 8.3 needs to detect an animal only when it is on the first side A of the gate (short range). It may also be that the reader 8.3 in that case detects animals which are located adjacent the first gate, on the first or second side. The reader 8.3 has a somewhat greater range. If the animal is on the second side, the gate is unlocked in that case too, but the animal still cannot walk from the second side B to the first side A via the passage comprising the turnstile.

The computer system can further be provided with a plurality of local computers, while a number of the controllable passages are each provided with a local computer. Thus, for instance, the reader 8.3 and the reader 8.7 can each be provided with a local computer. In the local computer of the reader 8.3, for instance, the first passage criteria of the passage 12.1 are stored, while in the local computer of the reader 8.7 the second passage criteria of the passage 12.1 are stored. When an animal is located on the first side A of the passage 12.1, it is recognized by the reader 8.3. The reader 8.3 sends the identification code of the recognized animal to the local computer of the reader 8.3. In the local computer, also the property information parameters of the animals are stored, together with the associated identification code of the animals. Thus the local computer can locally verify whether the passage 12.1 can be opened. Each local computer thus comprises a database with identification codes and associated property information parameters of the animals. It is possible that these property information parameters are downloaded and/or updated from the central computer 2. If desired, only those property information parameters can be downloaded that are relevant to carrying out the respective test. For the passage 12.1, this would then be the temperature of the animals, while the time that animals have last fed is not downloaded. The identification device 8.3 can then, together with the respective local computer, determine whether an animal is granted passage.

Further, it is possible that the respective property information parameters are stored, in a manner known per se, in the label (for instance a responder or transponder) which is worn by the animal. In that case, the label is regarded as part of the computer system C of the animal management system. When an animal is located, for instance, on the second side B of the passage 12.2, the reader 8.6 reads the relevant property information parameter from the label of the respective animal. To that end, the presence of the animal is detected by the reader 8.6. It is then not necessary for the reader 8.6 to identify the animal as well. This property information parameter is tested against the second passage criterion associated with the passage 12.2. When the test is positive, the computer 2 opens the passage 12.2. If the test is not positive, the passage 12.2 remains closed. Naturally, this test can also be carried out by a local computer, if any, of the reader 8.6. Strictly speaking, it is then not necessary to read identification information of the animal from the label. Reading out at least one property information parameter is then sufficient to perform the test.

The labels worn by the animals can be provided with a resonant circuit which is coupled with a microprocessor. In a manner known per se, the label can be read out with the aid of an interrogation field and, if desired, be programmed as well. Thus, if desired, as discussed in the last example, the respective property information parameters of the animal can be stored in the label. In that case, it is not necessary to read out the identification code of the label to determine whether a passage can be opened. Strictly speaking, the label does not need to comprise an identification code of the animal. However, when the property information parameters are stored in the computer 2 or in the respective local computer, together with the associated identification codes of the animals, it is necessary to read out the identification code of the respective label, so that the computer 2, on the basis of this identification code, can determine the associated property information parameters for performing the test. Such variants too are understood to fall within the scope of the invention.

The system of Fig. 3, too, can be arranged to monitor the animal on the basis of the identification system formed by the different readers and to determine where the animal is located. Also a path along which the animal has moved within the shed can thus be determined and stored by the computer 2.

## Claims

1. An animal management system for managing animals, the system being provided with at least one computer system in which per animal identification information together with at least one associated property information parameter about predetermined properties of the respective animal, such as age, milk production, lactation stage and sex, is stored, while in the computer system groups of animals are stored, in which, on the basis of predetermined criteria, particular animals meeting these criteria are classified, **characterized in that** in the computer system for each group at least one passage criterion is stored which is to be met by at least one property information parameter of an animal for the respective animal to be classified in the respective group, the animal management system being further arranged to classify the animals in the groups in an automatic manner with the aid of the computer system by testing for each animal the at least one property information parameter of the respective animal against the respective passage criteria of the groups.

2. An animal management system according to claim 1, **characterized in that** the computer system is arranged, in use, after the property information parameters of the animals have been upgraded, to reclassify the animals in groups on the basis of the upgraded property information.

3. An animal management system according to claim 2 or 3, **characterized in that** the computer system is arranged, in use, to reclassify the animals in groups repeatedly over time.

4. An animal management system according to any one of the preceding claims, **characterized in that** the animal management system is further provided with animal treatment means, such as an automatic feeder or a milking robot, for treating the animals, the computer system being further arranged for controlling the treatment means for a particular animal on the basis of at least one of the groups in which the respective animal is classified.

5. An animal management system according to any one of the preceding claims, **characterized in that** the system is further provided with a controllable passage which can be controllably released or closed, the computer system being further arranged for controlling the passage for a particular animal depending on whether or not the animal is classified in at least one predetermined group of the groups.

6. An animal management system according to claim 5, **characterized in that** at least one controllable passage is provided with a local computer in which per animal said identification information and said groups are stored.

7. An animal management system according to any one of the preceding claims, **characterized in that** the system is further provided with an animal identification system for identifying the animals, while the animal identification system, in use, transmits identification information of an identified animal to the computer system.

8. An animal management system according to claims 4 and 7, **characterized in that** the computer system is arranged, on the basis of the identification information of an animal located at one of the treatment means as determined with the aid of the animal identification system, to control the treatment means depending on whether or not the identified animal is classified in at least one predetermined group of the groups.

9. An animal management system according to claims 5 and 7, **characterized in that** the computer system is arranged, on the basis of the identification information of an animal located at one of the passages as determined with the aid of the animal identification system, to control the passages depending on whether or not the identified animal is classified in at least one predetermined group of the groups.

10. An animal management system according to any one of claims 7-9, **characterized in that** the computer system is arranged, in use, with the aid of the animal identification system, to store information about where an animal is located, for further processing.

11. An animal management system for managing animals, the system being provided with at least one computer system in which per animal identification information together with at least one associated property information parameter about predetermined properties of the respective animal, such as age, milk production, lactation stage and sex, is stored, the animal management system being further provided with a plurality of passages controllable by the computer system, which passages are each provided with a first and second side, while an animal, when a passage has been opened, can move via the passage from the first side to the second side of the respective passage, the animal management system being further provided with an animal identification system for detecting and optionally identifying an animal located on the first side of the controllable passages, **characterized in that** in the computer system per controllable passage at least one first passage criterion is stored which an animal must meet to pass the respective passage from the first side to the second side, the computer system being arranged, when the identification system detects an animal on the first side of a controllable passage, to test the at least one property information parameter of the respective animal against the first passage criterion of the respective passage, and wherein the computer system, on the basis of the test performed, opens or does not open the passage when the at least one property information parameter meets or does not meet the check, respectively.

12. An animal management system according to claim 11, **characterized in that** the computer system, on the basis of identification information of the animal located on the first side of the passage as determined by the identification system, selects said at least one property information parameter for performing the test.

13. An animal management system according to claim 11 or 12, **characterized in that** a number of passages of the animal management system are provided with, mutually different, first passage criteria.

14. An animal management system according to any one of claims 11-13, **characterized in that** in the computer system, for a number of the controllable passages, per controllable passage, at least one second passage criterion is stored which an animal must meet to pass the respective passage from the second side to the first side.

15. An animal management system according to claim 14, **characterized in that** the animal identification system is further arranged to detect and optionally identify an animal located on the second side of the controllable passages, the computer system being further arranged, when the identification system detects an animal on the second side of a controllable passage, to test the at least one property information parameter of the respective animal against the second passage criterion of the respective passage, and wherein the computer system, on the basis of the test performed, opens or does not open the passage when the at least one property information parameter meets or does not meet the test, respectively.

16. An animal management system according to claim 15, **characterized in that** the computer system, on the basis of identification information of the animal located on the second side of the passage as determined by the identification system, selects said at least one property information parameter for performing the test.

17. An animal management system according to claim 14, 15 or 16, **characterized in that** of a number of passages the first and second passage criteria are identical to each other.

18. An animal management system according to any one of claims 11, 12 ,13 or 17, **characterized in that** the identification system is arranged to determine at which passage an animal is detected and optionally identified.

19. An animal management system according to claim 11, 12 or 13, **characterized in that** the identification system is arranged to determine at which passage an animal on the first side is detected and optionally identified.

20. An animal management system according to any one of claims 14-17, **characterized in that** the identification system is arranged to determine at which passage an animal has been detected and optionally identified, and on which side the animal has been detected and optionally identified.

21. An animal management system according to any one of the preceding claims 11-20, **characterized in that** the computer system comprises a plurality of local computers, while a number of the controllable passages are provided with at least one of the local computers, and in a local computer of a passage, the first and any second passage criterion associated with the respective passage is stored, and further, optionally, in the local computer, the identification information and/or the associated property information parameter of the animals are stored.

22. An animal management system according to any one of claims 11-21, **characterized in that** the computer system is arranged, in use, with the aid of the animal identification system, to generate information about where an animal is present and, optionally, has been present.

23. An animal management system according to any one of the preceding claims 11-22, **characterized in that** the animal management system is further provided with animal treatment means, such as an automatic feeder or a milking robot, for treating the animals, the computer system being further arranged for controlling the treatment means for a particular animal on the basis of at least one property information parameter of the respective animal.

24. An animal management system according to claim 23, **characterized in that** the computer system is arranged, on the basis of identification information of an animal located at one of the treatment means as determined with the aid of the animal identification system, to select at least one property information parameter of the respective animal and to control the treatment means depending on the selected at least one property information parameter of the respective animal.

25. A method for managing animals with the aid of a computer, wherein per animal identification information together with at least one associated property information parameter about predetermined properties of the respective animal, such as age, milk production, lactation stage and sex is recorded, and wherein in the computer system groups of animals are stored in which, on the basis of predetermined criteria, particular animals that meet these criteria have been classified, **characterized in that** in the computer system for each group at least one passage criterion is stored which is to be met by at least one property information parameter of an animal for the respective animal to be classified in the respective group, and wherein, with the aid of the computer system, the animals are classified in the groups in an automatic manner by testing for each animal the at least one property information parameter of the respective animal against the respective passage criteria of the groups.

26. A method according to claim 25, **characterized in that**, after the property information parameters of the animals have been upgraded, the animals are reclassified into groups with the aid of the computer system on the basis of the upgraded property information.

27. A method according to claim 25 or 26, **characterized in that** with the aid of the computer system the animals are reclassified repeatedly over time.

28. A method according to any one of claims 25-27, **characterized in that** further, use is made of animal treatment means, such as an automatic feeder or a milking robot, for treating the animals, while with the aid of the computer system the treatment means are controlled for a particular animal depending on whether or not the animal is classified in at least one predetermined group of the groups.

29. A method according to any one of the preceding claims 25-28, **characterized in that** further, use is made of a controllable passage which can be controllably released and closed, while with the aid of the computer system, the passage is controlled for a particular animal depending on whether or not the animal is classified in at least one predetermined group of the groups.

30. A method according to any one of the preceding claims 25-29, **characterized in that** further, use is made of an animal identification system for identifying the animals, while the animal identification in use transmits identification information of an identified animal to the computer system.

31. A method according to claims 28 and 30, **characterized in that** with the aid of the computer, on the basis of the identification information of an animal located at one of the treatment means as determined with the aid of the animal identification system, the treatment means are controlled depending on whether or not the identified animal is classified in at least one predetermined group of the groups.

32. A method according to claims 29 and 30, **characterized in that** with the aid of the computer, on the basis of the identification information of an animal located at one of the passages as determined with the aid of the animal identification system, the passage is controlled depending on whether or not the identified animal is classified in at least one predetermined group of the groups.

33. A method according to any one of claims 30-32, **characterized in that** with the aid of the computer system and the animal identification system, information about where an animal is located is stored for further processing.
